# EUROPEAN PATENT SPECIFICATION

(11) **EP 3 126 662 B1**
(45) Date of publication and mention of the grant of the patent: **16.05.2018**
(21) Application number: 14736039.0
(22) Date of filing: 01.04.2014
(51) Int. Cl.: F02M 1/08, F02M 21/04

(54) **SUPPLY SYSTEM FOR A MONOFUEL MOTOR VEHICLE POWERED WITH ALTERNATIVE FUEL, MONOFUEL MOTOR VEHICLE POWERED WITH ALTERNATIVE FUEL AND METHOD OF ADJUSTMENT OF SAID SUPPLY SYSTEM**
ZUFUHRSYSTEM FÜR EINEN MIT ALTERNATIVE KRAFTSTOFF BETRIEBENE KRAFTFAHRZEUG, MONOVALENT MOTOR FÜR EIN MIT ALTERNATIVE KRAFTSTOFF BETRIEBENE KRAFTFAHRZEUG UND EINSTELLVERFAHREN DER ZUFUHR SYSTEM
SYSTÈME D'ALIMENTATION POUR UN VEHICULE ALIMENTÉ AVEC CARBURANT ALTERNATIF,VÉHICULE À MOTEUR ALIMENTÉ AVEC CARBURANT ALTERNATIF ET METHODE DE RÉGLAGE DE LEDIT SYSTÈME D'ALIMENTATION

(43) Date of publication of application: 08.02.2017
(73) Proprietor: Piaggio&C. S.p.A., 56025 Pontedera (Pisa) (IT)
(72) Inventor: FIACCAVENTO, Marcello, 56025 Pontedera Pisa (IT); CAPPELLINI, Antonio, 56025 Pontedera Pisa (IT)
(74) Representative: Mitola, Marco
(86) International application number: PCT/IT2014/000091
(87) International publication number: WO 2015/151120

(56) References cited:
- FR-A- 895 639
- US-A- 5 370 098
- US-A1- 2012 247 435

## Description

### Field of application

The present invention relates to a supply system for a monofuel motor vehicle powered with alternative fuel, such as LPG, methane, hydrogen and the like. The present invention also relates to a monofuel motor vehicle powered with alternative fuel and a method of adjustment of said supply system.

### Background art

As it is known, during cold start-ups, an endothermic motor encounters greater resistances due to the greater viscosity of lubricating oil, to the presence of higher friction between moving parts, to the presence of greater leaks between the cylinder barrels and the pistons due to the cold backlash determining a reduction in cylinder compression, as well as the fact that part of the air/fuel mixture tends to liquefy on the cold walls of the suction pipes and cylinders, leading to a leaning of the mixture titre. Due to this plurality of causes, the "cold" motor, even after its start-up, encounters difficulties in maintaining the idle condition, thereby causing functioning irregularities and often its shutdown. The problem is even more felt in the case of motors powered with alternative fuels such as LPG, methane, hydrogen and the like. It is in fact well known that such fuels has a lower heat of combustion than that of traditional fuels.

### Disclosure of the invention

In order to address this problem there exist solutions that provide for the use of choke valves or starters that for example enrich the fuel/air mixture, making it basically rich, so as to enhance the idle condition.

The known solutions have some drawbacks.

In fact, there are electronic starter solutions that are effective from the technical point of view, since they even out the idle condition and avoid motor shutdowns, but imply high costs. Such solutions, for example, provide for the use of carburetors having powered throttle valves actuatable automatically independent of the actual condition of the gas control, so as to increase, even in the release step of the gas control, the mixture flow sent to the cylinder.

As regards, on the contrary, motors powered with alternative fuels, these usually are of the bi-fuel type, in that they always envisage that a cold start-up, and sometimes even operation, (that is, as long as the motor temperature is below a threshold value) only takes place with a traditional fuel supply (for example, gasoline). Following the heat-up step, such motors automatically switch to the alternative fuel supply.

Therefore, the problem of cold start-up and operation is solved, in motors with alternative fuels simply by also providing the traditional fuel supply and therefore a double supply. Naturally, also this solution is expensive in that it has the requirement of a double supply and therefore of a double supply circuit, as well as a double tank for the respective fuels. Further, such solution also results in an increase in management costs, since traditional fuels have higher costs than alternative fuels, as well as in an increase of polluting emissions, since alternative fuels usually have lower polluting emissions than traditional fuels. Moreover, the double supply operation may result in vehicle usage problems where particularly strict anti-pollution norms are in force that limit or prohibit, for example in specific areas or regions, access to vehicles powered with traditional fuels. Another known system is shown in US-2012/247435.

There is therefore a need for a solution to the drawbacks and limitations reported with reference to the prior art by means of a system of the monofuel type that is both technically effective and, also and most importantly cheap to create.

Such need is met by a system in accordance with claim 1 and by a method of adjustment of a system in accordance with claim 12.

### Description of the Drawings

Further features and the advantages of the present invention will appear more clearly from the following description of preferred non-limiting embodiments thereof, wherein:

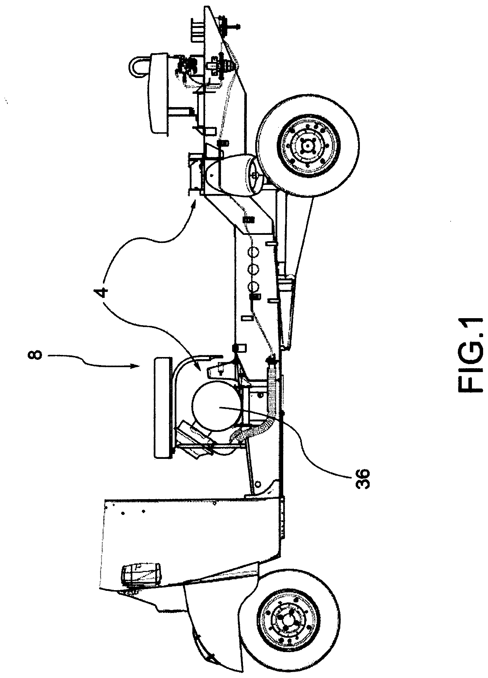

figure 1 shows a schematic view of a vehicle provided with a supply system of the monofuel type in accordance with the present invention;

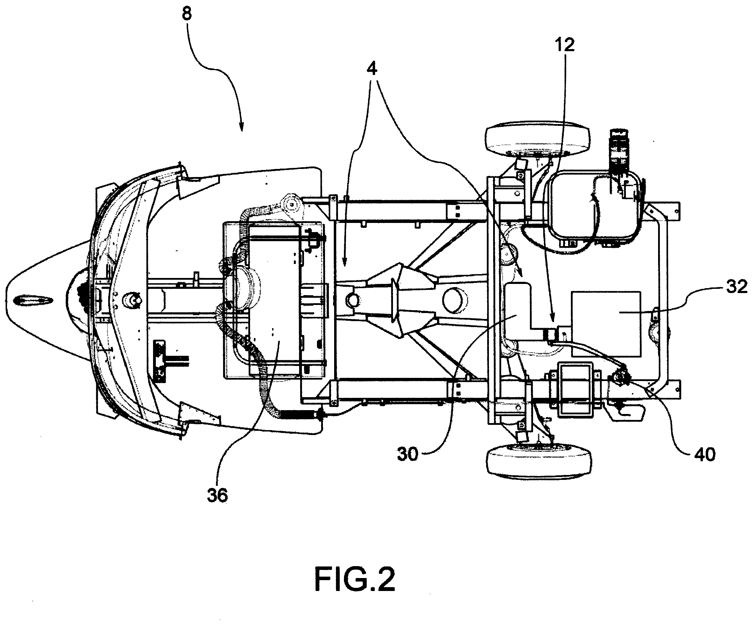

figure 2 shows a plan top view of the vehicle of figure 1;
figure 3 shows a section view of a portion of a supply system in accordance with the present invention, in a first hot or standard operating condition;
figure 4 shows a section view of a portion of a supply system in accordance with the present invention, in a second cold operating condition;

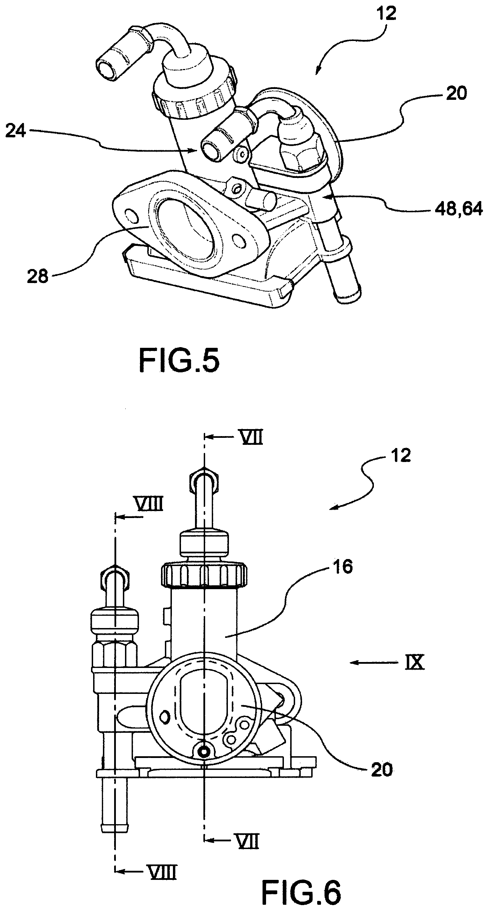

figure 5 shows a perspective view of a flow adjustment device of the system in accordance with the present invention;
figure 6 shows a side view of a flow adjustment device of the system in accordance with the present invention;

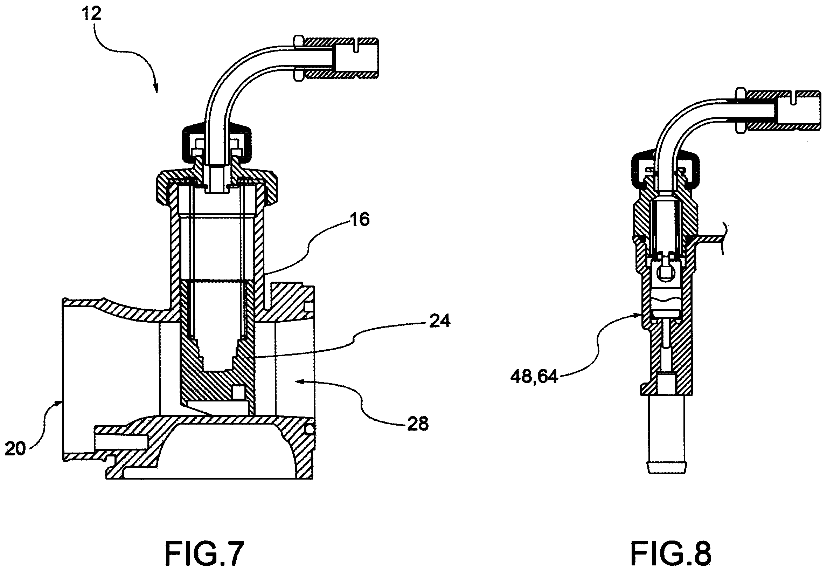

figure 7 shows a section view of the device of figure 6, along the section plane VII-VII of figure 6;
figure 8 shows a section view of the device of figure 6, along the section plane VIII-VIII of figure 6;

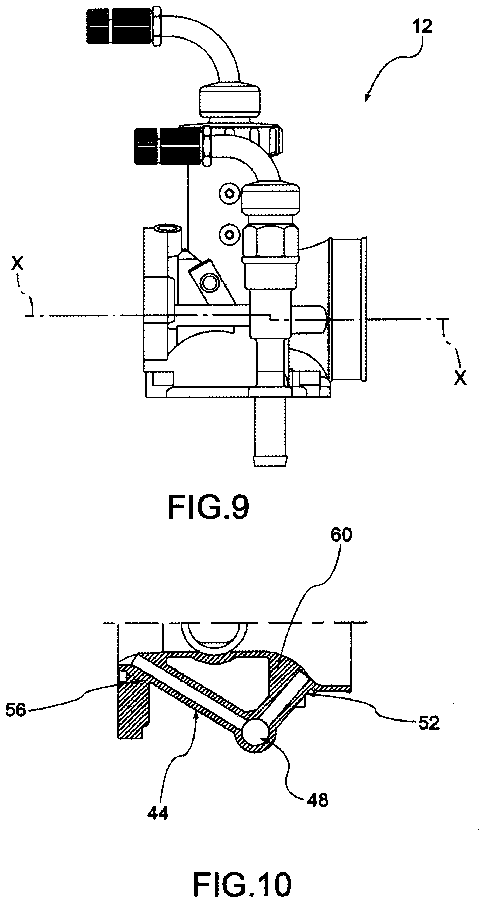

figure 9 shows a side view of the device of figure 6, from the side of arrow IX of figure 6;
figure 10 shows a section view of the device of figure 9, along the section plane X-X of figure 9;

Elements or parts of elements in common between the embodiments described below are referred to with the same reference numerals.

### Detailed description

With reference to the above figures, 4 globally indicates a monofuel supply system for an endothermic motor powered with an alternative fuel such as LPG, methane, hydrogen and the like.

In particular, for the purposes of the present invention, alternative fuels means fuels and the essentially gaseous state at ambient temperature, typically LPG (liquefied petroleum gas), methane, hydrogen used instead of "traditional fuels" such as gasoline and gas oil.

In particular, in motors powered with alternative fuels, the fuel is usually compressed, in a liquid or gaseous phase, in high pressure tanks, to be then supplied to the motor in a gaseous phase.

Further, for the purposes of the present invention, the specific type of motor used is not relevant.

The supply system 4 may further be applied to any type of vehicle 8.

The supply system 4 comprises a flow adjustment device 12 having a device body 16 provided with a main intake pipe 20, at lease one shutter 24 intercepting and occluding at least partially the main intake pipe 20, and a delivery pipe 28 arranged downstream of the main intake pipe 20.

The main intake pipe 20 may be partially integral with the body and/or comprise extensions secured for instance by means of suitable straps. According to one embodiment, the main intake pipe is in fluid connection with an air filter 30 for filtering the supporter of combustion (air) to suction and send to the delivery pipe 28, and then to the motor 32.

The shutter 24 may be of any shape and type, for example of the throttle or gate type and has the function of choking, based on its position, the inlet port to the delivery pipe 28. The shutter 24 is operatively connected to the gas control or accelerator of the vehicle 8 so that the user, by changing its position, may adjust the supply flow sent to the motor and therefore the power output by the motor itself.

The delivery pipe 28 is in fluid connection with the cylinder head 32 for supplying the fuel/supporter of combustion mixture to at least one cylinder 38.

The system further comprises a tank 36 of alternative fuel. As mentioned above, the alternative fuel is usually compressed, in a liquid or gaseous phase, in high pressure tanks 36, to be then supplied to the motor in a gaseous phase.

Therefore, in order for it to be sent or supplied to the motor, the fuel passes through a pressure adjustment device 40, that is a pressure reducer/vaporizer, in order to adjust the supply in a precise and controlled way.

The pressure adjustment device 40 therefore serves the function of receiving in input the fuel at a supply pressure and send it in output at a delivery pressure, lower than the supply pressure, so as to send the fuel to diffuser devices, as best described hereinafter.

The main intake pipe 20 receives a main flow comprising a supporter of combustion and an alternative fuel, coming from said tank 36, mixed according to a first titre a1; titre of the mixture means the ratio between the mass quantity of air (supporter of combustion) per mass unit of fuel (alternative fuel) that form the mixture.

For example, the supply system 4 comprises a main diffuser 41 in fluid connection with the tank 36 so that it injects alternative fuel to the main intake pipe 20, and wherein the main intake pipe 20 is in fluid connection with a suction port 42 of supporter of combustion, such as air, so as to obtain, upstream of the shutter 24, the mixing of the main flow having the first titre a1.

Advantageously, the system 4 comprises a secondary intake pipe 44, for inputting a secondary flow, different from the main flow, directly into the delivery pipe 28 bypassing the shutter 24, and is provided with an enrichment diffuser 48 of alternative fuel, in fluid connection with the tank 36, so that it enriches with fuel the secondary flow and sends it to the delivery pipe with a second titre a2 which is richer in fuel than the first titre a1 of the main flow.

A richer titre a2 means that a mixture sent to the secondary intake pipe 44 has a higher mass percentage of fuel than the mixture sent to the main intake pipe 20.

According to one embodiment, the secondary intake pipe 44 is shaped so that it draws from the main intake pipe 20 a portion of the main flow, according to the first titre al, and mixes it with alternative fuel by means of an enrichment diffuser 48 to obtain the secondary flow having the second titre a2.

In other words, the enrichment diffuser 48 enriches with fuel a mixture that already comprises a percentage of fuel, in particular according to titre al, taking it to titre a2 before inputting it into the secondary intake pipe 44.

For example, the secondary intake pipe 44 is provided with an inlet 52 and an outlet 56, with the inlet 52 being in fluid connection with the main intake pipe 20 so that it suctions a portion of the main flow having titre al, the outlet 56 leading to the delivery pipe 28 downstream of the shutter 24.

For example, the inlet 52 of the secondary intake pipe 44 is located downstream of said main diffuser 41 so as to draw and input to the secondary pipe 44 a portion of main flow comprising fuel and supporter of combustion, mixed according to the first titre a1.

According to a further embodiment, the secondary intake pipe 44 is shaped so that it draws from the main intake pipe 20 a portion of supporter of combustion, not mixed with the fuel, and mixes such flow of supporter of combustion with alternative fuel, by means of the enrichment diffuser, to obtain the secondary flow having the second titre a2.

For example, the secondary intake pipe 44 is provided with an inlet 52 and an outlet 56, wherein the inlet 52 is connected to the main intake pipe 20 so that it directly suctions supporter of combustion, and the outlet 56 leads to the delivery pipe 28 downstream of the shutter 24.

For example, the inlet 52 of the secondary intake pipe 44 may be located upstream of said main diffuser 41 so as to draw and input at the inlet of the secondary intake pipe 44 a flow comprising supporter of combustion only, to be mixed according to the second titre a2 by means of the enrichment diffuser 48.

The secondary intake pipe 44 may be located laterally with respect to the main intake pipe 20. According to a possible embodiment, the secondary intake pipe 44 is at least partially obtained within a lateral wall 60 of the device body 16, so that it has an inlet 52 and on outlet 56 respectively leading to the main intake pipe 20 and the delivery pipe 28.

According to one embodiment, the secondary intake pipe 44 is separated from the device body (16), and is provided with an inlet 52 and on outlet 56 respectively leading to the main intake pipe 20 and the delivery pipe 28.

The secondary intake pipe 44 is provided with an intake valve 64 capable of permitting or preventing the delivery of the secondary flow to the delivery pipe 28.

Preferably, said intake valve 64 is controlled by means of a manual actuation device, for example by means of a transmission cable.

For cold start-up and the following cold operation, the user therefore has the possibility of actuating the secondary intake flow and deactivate it when the motor has reached the suitable operating temperature.

The operation and therefore adjustment of a supply system according to the present invention shall now be described.

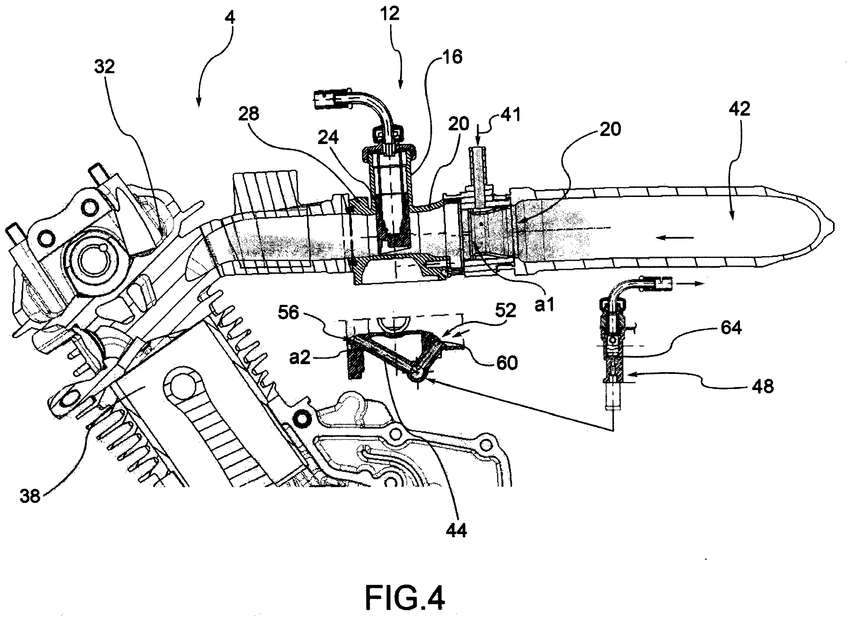

In particular, during cold start-up or cold operation (figure 4), a secondary delivery flow is activated inside the secondary intake pipe 44, for example through the actuation of manual control, bypassing the shutter 24. In this are input to the delivery pipe both the main delivery flow, having titre al, and the secondary delivery flow, having titre a2, with titre a2 being richer than titre a1. In this way the flow titre sent to the motor is generally enriched and the behaviour of the motor itself is regularized.

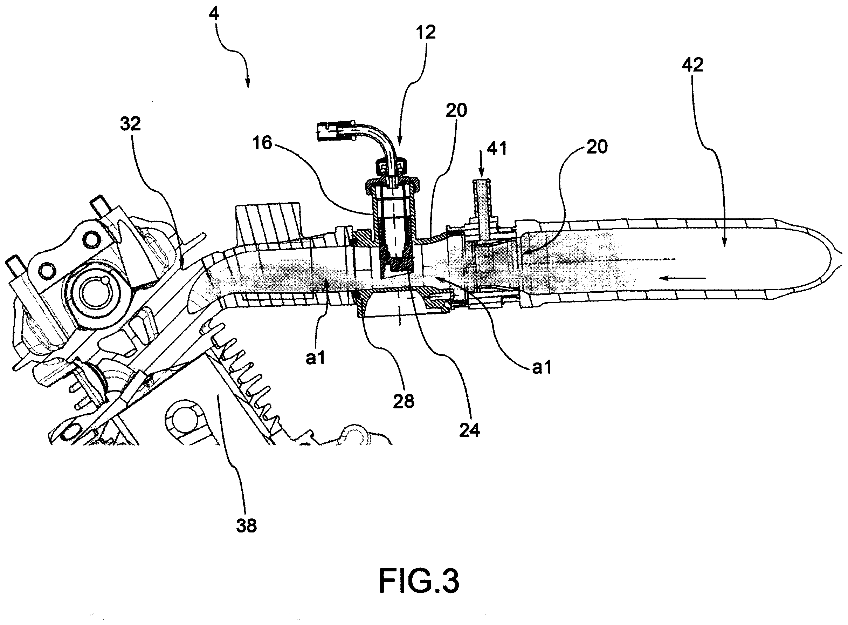

When the motor reaches the correct operating temperature, it is possible to lock the secondary flow by acting again on the manual control not shown (figure 3). In this way the motor is supplied with the main intake flow only having titre a1 (design).

As can be understood from the description, the present invention allows overcoming the disadvantages of the prior art.

In particular, the device according to the present invention allows to effectively start-up and regularize the idle operation of motors with monofuel supply both during cold start-up and operation.

In fact, the enrichment flow has a different and richer stoichiometry than the main supply flow. In this way the fuel/air mixture supplied to the cylinder is certainly richer than the main or design one so as to regularize cold operation.

As seen, the delivery of a richer secondary flow, that is having a high fuel content than the main flow, allows compensating for the irregularities due to friction, to the greater viscosity of lubricating oil, to losses of compression due to backlash and leaning of the mixture caused by a partial liquefaction of fuel, in order to regularize the cold operation of the motor.

Advantageously, the solution according to the present invention is simple and inexpensive to manufacture: in fact it does not require electronic devices and especially it does not require a double motor supply, that is a separate traditional fuel supply.

In fact, the motor supply will always be of the monofuel type, and thus powered by alternative fuels: in this way it is also possible to satisfy even stricter anti-pollution regulations and it is not necessary to use more expensive double supply systems.

A man skilled in the art may make several changes and adjustments to the systems and methods of adjustment described above in order to meet specific and incidental needs, all falling within the scope of protection defined in the following claims.

## Claims

1. A monofuel supply system (4) for a motor (32) powered with alternative fuel, such as LPG, methane, hydrogen and the like, comprising
- a flow adjustment device (12) having a device body (16) provided with a main intake pipe (20), at lease one shutter (24) intercepting and occluding at least partially the main intake pipe (20), and a delivery pipe (28) arranged downstream of the main intake pipe (20),
- a tank (36) of alternative fuel,
- wherein the main intake pipe (20) receives a main flow comprising a supporter of combustion and an alternative fuel, coming from said tank (36), mixed according to a first titre (a1) **characterized in that**
- the system (4) comprises a secondary intake pipe (44), for inputting a secondary flow, different from the main flow, directly into the delivery pipe (28) bypassing the shutter (24), and is provided with an enrichment diffuser (48) of alternative fuel, in fluid connection with said tank (36), so that it enriches with fuel the secondary flow and sends it to the delivery pipe (28) with a second titre (a2) which is richer in fuel than the first titre (a1) of the main flow, wherein the secondary intake pipe (44) is shaped so that it draws from the main intake pipe (20) a portion of the main flow, according to the first titre (a1), and mixes it with alternative fuel by means of an enrichment diffuser (48) to obtain the secondary flow having the second titre (a2).

2. A supply system (4) according to claim 1, wherein the secondary intake pipe (44) is provided with an inlet (52) and an outlet (56), with the inlet (52) being in fluid connection with the main intake pipe (20) so that it suctions a portion of the main flow, the outlet (56) leading to the delivery pipe (28) downstream of the shutter (24).

3. A supply system (4) according to any one of the preceding claims, wherein the secondary intake pipe (44) is located laterally with respect to the main intake pipe (20) .

4. A supply system (4) according to any one of the preceding claims, wherein the secondary intake pipe (44) is at least partially obtained within a lateral wall (60) of the device body (16), so that it has an inlet (52) and on outlet (56) respectively leading to the main intake pipe (20) and the delivery pipe (28).

5. A supply system (4) according to any one of claims 1 to 3, wherein the secondary intake pipe (44) is separated from the device body (16), and is provided with an inlet (52) and on outlet (56) respectively leading to the main intake pipe (20) and the delivery pipe (28).

6. A supply system (4) according to any of the preceding claims, wherein the secondary intake pipe (44) is provided with an intake valve (64) capable of permitting or preventing the delivery of the secondary flow to the delivery pipe (28).

7. A supply system (4) according to claim 6, wherein said intake valve (64) is controlled by means of a manual actuation device.

8. A supply system (4) according to any one of the preceding claims, wherein the system comprises a main diffuser (41) in fluid connection with the tank (36) so that it injects alternative fuel to the main intake pipe (20), and wherein the main intake pipe (20) is in fluid connection with a suction port (42) of supporter of combustion, such as air, so as to obtain, upstream of the shutter (24), the mixing of the main flow having the first titre (a1).

9. A supply system (4) according to claim 8, wherein the secondary intake pipe (44) comprises an inlet (52) located upstream of said main diffuser (41) so as to draw and input at the inlet of the secondary intake pipe (44) a flow comprising supporter of combustion only, to be mixed according to the second titre (a2) by means of the enrichment diffuser (48).

10. A supply system (4) according to claim 8, wherein the secondary intake pipe (44) comprises an inlet (52) located downstream of said main diffuser (41) so as to draw and input to the secondary intake pipe (44) a portion of main flow comprising fuel and supporter of combustion, mixed according to the first titre (a1).

11. A motor vehicle (8) comprising a supply system (4) according to any one of claims 1 to 10.

12. A method of adjustment of a monofuel supply system (4) for a motor powered with an alternative fuel such as LPG, methane, hydrogen and the like, in particular during the steps of cold start-up and operation, the method comprising the steps of:
- providing a flow adjustment device (12) having a device body (16) provided with a main intake pipe (20), at lease one shutter (24) intercepting and occluding at least partially the main intake pipe (20), and a delivery pipe (28) arranged downstream of the main intake pipe (20),
- providing a tank (36) of alternative fuel,
- inputting in the main intake pipe (20) a main flow comprising a supporter of combustion and an alternative fuel, coming from said tank (36), mixed according to a first titre (a1),
- providing a secondary intake pipe (44) for inputting a secondary flow, different from the main flow, directly in the delivery pipe (28) bypassing the shutter (24), with the secondary intake pipe (44) being provided with an enrichment diffuser (48) of alternative fuel, in fluid connection with said tank (36),
- enabling, during the cold start-up and/or operation steps, the secondary flow directly in the delivery pipe (28) bypassing the shutter (24), with said secondary flow having a second titre (a2) which is richer in fuel than the first titre (a1) of the main flow.

13. A method according to claim 12, wherein the step of enabling the secondary flow directly in the delivery pipe (28) bypassing the shutter (24) is performed manually by the user.

14. A method according to claim 12 or 13, wherein the monofuel supply system (4) is a system according to any one of claims 1 to 10.

## Patentansprüche

1. Zuführungssystem (4) für Einkomponentenbrennstoff für einen Motor (32), der mit alternativem Brennstoff, wie etwa LPG, Methan, Wasserstoff und Ähnlichem, betrieben wird, das umfasst:
- eine Strömungseinstellvorrichtung (12) mit einem Vorrichtungskörper (16), der mit einer Hauptansaugleitung (20), wenigstens einem Verschluss (24), der die Hauptansaugleitung (20) wenigstens teilweise unterbricht und verschließt, und einer Abgabeleitung (28), die strömungsabwärtig von der Hauptansaugleitung (20) angeordnet ist, versehen ist,
- einen Behälter (36) mit alternativem Brennstoff,
- wobei die Hauptansaugleitung (20) eine Hauptströmung aufnimmt, die einen Verbrennungsunterstützer und einen alternativen Brennstoff umfasst, die von dem Behälter (36) kommt, die gemäß einem ersten Titer (a1) gemischt ist, **dadurch gekennzeichnet, dass**
- das System (4) eine sekundäre Ansaugleitung (44) umfasst, um eine sekundäre Strömung, die verschieden zu der Hauptströmung ist, direkt in die Abgabeleitung (28) unter Umgehung des Verschlusses (24) einzuspeisen, und mit einem Anreicherungsdiffusor (48) für alternativen Brennstoff versehen ist, der in einer Fluidverbindung mit dem Behälter (36) steht, so dass er die sekundäre Strömung mit Brennstoff anreichert und sie mit einem zweiten Titer (a2), der reicher an Brennstoff als der erste Titer (a1) der Hauptströmung ist, zu der Abgabeleitung (28) befördert, wobei die sekundäre Ansaugleitung (44) derart geformt ist, dass sie gemäß dem ersten Titer (a1) einen Teil der Hauptströmung von der Hauptansaugleitung (20) ansaugt und sie mit Hilfe eines Anreicherungsdiffusors (48) mit alternativem Brennstoff mischt, um die sekundäre Strömung mit dem zweiten Titer (a2) zu erhalten.

2. Zuführungssystem (4) nach Anspruch 1, wobei die sekundäre Ansaugleitung (44) mit einem Einlass (52) und einem Auslass (56) versehen ist, wobei der Einlass (52) in einer Fluidverbindung mit der Hauptansaugleitung (20) steht, so dass er einen Teil der Hauptströmung ansaugt, wobei der Auslass (56) zu der Abgabeleitung (28) strömungsabwärtig von dem Verschluss (24) führt.

3. Zuführungssystem (4) nach einem der vorhergehenden Ansprüche, wobei die sekundäre Ansaugleitung (44) in Bezug auf die Hauptansaugleitung (20) seitlich angeordnet ist.

4. Zuführungssystem (4) nach einem der vorhergehenden Ansprüche, wobei die sekundäre Ansaugleitung (44) wenigstens teilweise innerhalb einer seitlichen Wand (60) des Vorrichtungskörpers (16) erhalten wird, so dass sie einen Einlass (52) und einen Auslass (56) hat, die jeweils zu der Hauptansaugleitung (20) und der Abgabeleitung (28) führen.

5. Zuführungssystem (4) nach einem der Ansprüche 1 bis 3, wobei die sekundäre Ansaugleitung (44) von dem Vorrichtungskörper (16) getrennt ist und mit einem Einlass (52) und einem Auslass (56) versehen ist, die jeweils zu der Hauptansaugleitung (20) und der Abgabeleitung (28) führen.

6. Zuführungssystem (4) nach einem der vorhergehenden Ansprüche, wobei die sekundäre Ansaugleitung (44) mit einem Ansaugventil (64) versehen ist, das fähig ist, die Abgabe der sekundären Strömung an die Abgabeleitung (28) zuzulassen oder zu verhindern.

7. Zuführungssystem (4) nach Anspruch 6, wobei das Ansaugventil (64) mit Hilfe einer manuellen Betätigungsvorrichtung gesteuert wird.

8. Zuführungssystem (4) nach einem der vorhergehenden Ansprüche, wobei das System einen Hauptdiffusor (41) in einer Fluidverbindung mit dem Behälter (36) umfasst, so dass er alternativen Brennstoff in die Hauptansaugleitung (20) einspritzt, und wobei die Hauptansaugleitung (20) in einer Fluidverbindung mit einer Ansaugöffnung (42) für Verbrennungsunterstützer, wie etwa Luft, steht, um strömungsaufwärtig von dem Verschluss (24) die Mischung der Hauptströmung mit dem ersten Titer (a1) zu erhalten.

9. Zuführungssystem (4) nach Anspruch 8, wobei die sekundäre Ansaugleitung (44) einen Einlass (52) umfasst, der strömungsaufwärtig von dem Hauptdiffusor (41) angeordnet ist, um an dem Einlass der sekundären Ansaugleitung (44) eine Strömung anzusaugen und einzuspeisen, die nur Verbrennungsunterstützer umfasst, um mit Hilfe des Anreicherungsdiffusors (48) gemäß dem zweiten Titer (a2) gemischt zu werden.

10. Zuführungssystem (4) nach Anspruch 8, wobei die sekundäre Ansaugleitung (44) einen Einlass (52) umfasst, der strömungsabwärtig von dem Hauptdiffusor (41) angeordnet ist, um in den Einlass der sekundären Ansaugleitung (44) einen Teil der Hauptströmung anzusaugen und einzuspeisen, die Brennstoff und Verbrennungsunterstützer umfasst, die gemäß dem ersten Titer (a1) gemischt ist.

11. Motorfahrzeug (8), das ein Zuführungssystem (4) nach einem der Ansprüche 1 bis 10 umfasst.

12. Verfahren zur Einstellung eines Zuführungssystems (4) für Einkomponentenbrennstoff für einen Motor, der mit einem alternativen Brennstoff, wie etwa LPG, Methan, Wasserstoff und Ähnlichem, betrieben wird, insbesondere während der Schritte des Kaltstarts und Betriebs, wobei das Verfahren die folgenden Schritte umfasst:
- Bereitstellen einer Strömungseinstellvorrichtung (12) mit einem Vorrichtungskörper (16), der mit einer Hauptansaugleitung (20), wenigstens einem Verschluss (24), der die Hauptansaugleitung (20) wenigstens teilweise unterbricht und verschließt, und einer Abgabeleitung (28), die strömungsabwärtig von der Hauptansaugleitung (20) angeordnet ist, versehen ist,
- Bereitstellen eines Behälters (36) mit alternativem Brennstoff,
- Einspeisen einer Hauptströmung, die einen Verbrennungsunterstützer und einen alternativen Brennstoff umfasst, die von dem Behälter (36) kommt, die gemäß einem ersten Titer (a1) gemischt sind, in die Hauptansaugleitung (20),
- Bereitstellen einer sekundären Ansaugleitung (44) zum Einspeisen einer sekundären Strömung, die verschieden zu der Hauptströmung ist, direkt in die Abgabeleitung (28) unter Umgehung des Verschlusses (24), wobei die sekundäre Ansaugleitung (44) mit einem Anreicherungsdiffusor (48) für alternativen Brennstoff versehen ist, der in einer Fluidverbindung mit dem Behälter (36) steht,
- während des Kaltstarts und/oder Betriebsschritten Aktivieren der sekundären Strömung unter Umgehung des Verschlusses (24) direkt in die Abgabeleitung (28), wobei die sekundäre Strömung einen zweiten Titer (a2) hat, der reicher an Brennstoff als der erste Titer (a1) der Hauptströmung ist.

13. Verfahren nach Anspruch 12, wobei der Schritt des Aktivierens der sekundären Strömung direkt in die Abgabeleitung (28) unter Umgehung des Verschlusses (24) von dem Benutzer manuell durchgeführt wird.

14. Verfahren nach Anspruch 12 oder 13, wobei das Zuführungssystem (4) für Einkomponentenbrennstoff ein System nach einem der Ansprüche 1 bis 10 ist.

## Revendications

1. Système d'alimentation en monocarburant (4) pour un moteur (32) alimenté en carburant alternatif, tel que du GPL, du méthane, de l'hydrogène et analogue, comprenant
- un dispositif d'ajustement d'écoulement (12) ayant un corps de dispositif (16) doté d'un tuyau d'admission principal (20), d'au moins un obturateur (24) interceptant et obstruant au moins partiellement le tuyau d'admission principal (20), et d'un tuyau de distribution (28) agencé en aval du tuyau d'admission principal (20),
- un réservoir (36) de carburant alternatif,
- dans lequel le tuyau d'admission principal (20) reçoit un écoulement principal comprenant un auxiliaire de combustion et un carburant alternatif, provenant dudit réservoir (36), mélangés selon un premier titre (a1) **caractérisé en ce que**
- le système (4) comprend un tuyau d'admission secondaire (44), pour introduire un écoulement secondaire, différent de l'écoulement principal, directement dans le tuyau de distribution (28) en contournant l'obturateur (24), et est doté d'un diffuseur d'enrichissement (48) de carburant alternatif, en communication fluidique avec ledit réservoir (36), de sorte qu'il enrichisse en carburant l'écoulement secondaire et l'envoie au tuyau de distribution (28) avec un second titre (a2) qui est plus riche en carburant que le premier titre (a1) de l'écoulement principal, dans lequel le tuyau d'admission secondaire (44) est formé de sorte qu'il extrait du tuyau d'admission principal (20) une portion de l'écoulement principal, selon le premier titre (a1), et le mélange avec un carburant alternatif au moyen d'un diffuseur d'enrichissement (48) pour obtenir l'écoulement secondaire ayant le second titre (a2).

2. Système d'alimentation (4) selon la revendication 1, dans lequel le tuyau d'admission secondaire (44) est doté d'une entrée (52) et d'une sortie (56), avec l'entrée (52) étant en communication fluidique avec le tuyau d'admission principal (20) de sorte qu'il aspire une portion de l'écoulement principal, la sortie (56) menant au tuyau de distribution (28) en aval de l'obturateur (24).

3. Système d'alimentation (4) selon l'une quelconque des revendications précédentes, dans lequel le tuyau d'admission secondaire (44) est situé latéralement par rapport au tuyau d'admission principal (20).

4. Système d'alimentation (4) selon l'une quelconque des revendications précédentes, dans lequel le tuyau d'admission secondaire (44) est au moins partiellement obtenu à l'intérieur d'une paroi latérale (60) du corps de dispositif (16), de sorte qu'il ait une entrée (52) et sur une sortie (56) respectivement menant au tuyau d'admission principal (20) et au tuyau de distribution (28).

5. Système d'alimentation (4) selon l'une quelconque des revendications 1 à 3, dans lequel le tuyau d'admission secondaire (44) est séparé du corps de dispositif (16), et est doté d'une entrée (52) et sur une sortie (56) respectivement menant au tuyau d'admission principal (20) et au tuyau de distribution (28).

6. Système d'alimentation (4) selon l'une quelconque des revendications précédentes, dans lequel le tuyau d'admission secondaire (44) est doté d'une soupape d'admission (64) apte à permettre ou à empêcher la distribution de l'écoulement secondaire au tuyau de distribution (28).

7. Système d'alimentation (4) selon la revendication 6, dans lequel ladite soupape d'admission (64) est commandée au moyen d'un dispositif à actionnement manuel.

8. Système d'alimentation (4) selon l'une quelconque des revendications précédentes, dans lequel le système comprend un diffuseur principal (41) en communication fluidique avec le réservoir (36) de sorte qu'il injecte du carburant alternatif dans le tuyau d'admission principal (20), et dans lequel le tuyau d'admission principal (20) est en communication fluidique avec un orifice d'aspiration (42) d'un auxiliaire de combustion, tel que de l'air, de manière à obtenir, en amont de l'obturateur (24), le mélange de l'écoulement principal ayant le premier titre (a1).

9. Système d'alimentation (4) selon la revendication 8, dans lequel le tuyau d'admission secondaire (44) comprend une entrée (52) située en amont dudit diffuseur principal (41) de manière à extraire de et à introduire dans l'entrée du tuyau d'admission secondaire (44) un écoulement comprenant un auxiliaire de combustion seul, à mélanger selon le second titre (a2) au moyen du diffuseur d'enrichissement (48).

10. Système d'alimentation (4) selon la revendication 8, dans lequel le tuyau d'admission secondaire (44) comprend une entrée (52) située en aval dudit diffuseur principal (41) de manière à extraire du et à introduire dans le tuyau d'admission secondaire (44) une portion de l'écoulement principal comprenant un carburant et un auxiliaire de combustion, mélangés selon le premier titre (a1).

11. Véhicule à moteur (8) comprenant un système d'alimentation (4) selon l'une quelconque des revendications 1 à 10.

12. Procédé d'ajustement d'un système d'alimentation en monocarburant (4) pour un moteur alimenté en carburant alternatif tel que du GPL, du méthane, de l'hydrogène et analogue, en particulier pendant les étapes de démarrage et de fonctionnement à froid, le procédé comprenant les étapes suivantes :
- la fourniture d'un dispositif d'ajustement d'écoulement (12) ayant un corps de dispositif (16) doté d'un tuyau d'admission principal (20), d'au moins un obturateur (24) interceptant et obstruant au moins partiellement le tuyau d'admission principal (20), et d'un tuyau de distribution (28) agencé en aval du tuyau d'admission principal (20),
- la fourniture d'un réservoir (36) de carburant alternatif,
- l'introduction dans le tuyau d'admission principal (20) d'un écoulement principal comprenant un auxiliaire de combustion et un carburant alternatif, provenant dudit réservoir (36), mélangés selon un premier titre (1a),
- la fourniture d'un tuyau d'admission secondaire (44) pour introduire un écoulement secondaire, différent de l'écoulement principal, directement dans le tuyau de distribution (28) en contournant l'obturateur (24), avec le tuyau d'admission secondaire (44) étant doté d'un diffuseur d'enrichissement (48) de carburant alternatif, en communication fluidique avec ledit réservoir (36),
- le fait de permettre, pendant les étapes de démarrage et/ou de fonctionnement à froid, l'écoulement secondaire directement dans le tuyau de distribution (28) en contournant l'obturateur (24), avec ledit écoulement secondaire ayant second titre (a2) qui est plus riche en carburant que le premier titre (a1) de l'écoulement principal.

13. Procédé selon la revendication 12, dans lequel l'étape comprenant le fait de permettre l'écoulement secondaire directement dans le tuyau de distribution (28) en contournant l'obturateur (24) est réalisée manuellement par l'utilisateur.

14. Procédé selon la revendication 12 ou 13, dans lequel le système d'alimentation en monocarburant (4) est un système selon l'une quelconque des revendications 1 à 10.
